# EUROPÄISCHE PATENTSCHRIFT

(11) **EP 0 529 263 B1**
(45) Veröffentlichungstag und Bekanntmachung des Hinweises auf die Patenterteilung: **27.09.1995**
(21) Anmeldenummer: 92111778.4
(22) Anmeldetag: 10.07.1992
(51) Int. Cl.: B60H 1/00

(54) **Deckenkanalanordnung für Grossraumfahrzeuge**
Ceiling duct arrangement for large-volume vehicles
Disposition de la canalisation du plafond pour véhicules de grand volume

(30) Priorität: 27.08.1991 DE 4128234
(43) Veröffentlichungstag der Anmeldung: 03.03.1993
(73) Patentinhaber: MERCEDES-BENZ AG, 70327 Stuttgart (DE)
(72) Erfinder: Marold, Adolf, W-7030 Böblingen-4 (DE); Schmid, Wolfgang, W-7044 Ehningen (DE); Kalt, Hans-Peter, W-7036 Schönaich (DE)

(56) Entgegenhaltungen:
- DE-A- 3 729 050
- DE-A- 3 926 638
- DE-A- 4 000 732
- FR-A- 2 379 403

## Beschreibung

Die Erfindung betrifft eine Deckenkanalanordnung für Großraumfahrzeuge gemäß dem Oberbegriff des Patentanspruchs 1.

Bei einer bekannten Deckenkanalanordnung dieser Art für einen Omnibus (DE-A-4 000 732) sind im Versorgungskanal zu den Seitenscheiben des Fahrzeugs gerichtete Luftauslaßschlitze und im Panelkanal nach unten gerichtete Luftauslaßdüsen sowie zur Fahrzeugmitte hin gerichtete Luftaustrittsdüsen, die vorderseitig der Gepäckablage angeordnet sind, vorgesehen. Die dem Versorgungskanal zugeführte temperierte Luft strömt über diese Schlitze und Düsen aus und ermöglicht eine Luftbeaufschlagung der Seitenscheiben sowie - selbst bei belegter Gepäckablage - eine ungestörte Luftzufuhr zum Mittelgangbereich des Fahrzeugs. Die nach unten weisenden Luftaustrittsdüsen können von den Passagieren individuell eingestellt werden.

Eine solche Deckenkanalanordnung ist über den Sitzreihen beiderseits des Mittelgangs des Fahrzeugs an der Fahrzeugdecke installiert und befindet sich für einen im Mittelgang stehenden Fahrgast wenig oberhalb dessen Kopfhöhe, so daß die Deckenkanalanordnung von den Fahrgästen als Abstützung beim Stehen oder Laufen im Mittelgang verwendet wird. Aus diesem Grund sind häufig an der Deckenkanalanordnung längsdurchgehende Handläufe oder Griffleisten zu finden, die den Fahrgästen im Mittelgang Halte- und Abstützungsmöglichkeiten bieten sollen. Es ist daher notwendig, eine solche Deckenkanalanordnung mit großer Biegesteifigkeit auszuführen, damit sie die durch die Fahrgäste eingeleiteten Handkräfte aufnehmen kann, wobei sie gleichzeitig einer gewichtssparenden Bauweise sein soll. Weiterhin soll die Baueinheit leicht an der Fahrzeugdecke zu montieren sein.

Der Erfindung liegt die Aufgabe zugrunde, bei einer Deckenkanalanordnung der eingangs genannten Art die Luftkanäle und die Gepäckablage konstruktiv zu einer vormontierbaren, biegesteifen, leichten Baueinheit zusammenzufassen, die im Zusammenbauzustand einfach an der Fahrzeugdecke montiert werden kann. Bei allen hierzu erforderlichen Maßnahmen soll dabei der Grundsatz einer rationellen Fertigung beachtet werden.

Die Aufgabe ist bei einer Deckenkanalanordnung der im Oberbegriff des Anspruchs 1 definierten Gattung erfindungsgemäß durch die Merkmale im Kennzeichenteil des Anspruchs 1 gelöst.

Bei der erfindungsgemäßen Deckenkanalanordnung sind die Luftkanäle mit der Gepäckablage zu einer Kompletteinheit vereint, die vormontierbar ist und im Zusammenbauzustand, z.B. mittels einer hydraulischen Hebeeinrichtung, an die Fahrzeugdecke angehoben werden kann und dort befestigt wird. Durch das steife Aluminiumstrangpreßprofil ergeben sich Gewichtsvorteile und eine hohe Biegefestigkeit und -steifigkeit der Zusammenbaueinheit dort, wo sie benötigt wird, nämlich im vorderen, dem Mittelgang zugekehrten Bereich, wo die Abstützkräfte der Fahrgäste eingeleitet werden. Die im Rollverfahren verformten, sehr leichten Aluminiumbleche sowie das Anclinchen dieser Aluminiumbleche am Aluminiumstrangpreßprofil tragen wesentlich zur Gewichtsersparnis bei. Die in regelmäßigen Abständen am Aluminiumstrangpreßprofil angeordneten Befestigungssicheln dienen nicht nur zur Deckenbefestigung sondern tragen auch wesentlich zur Stabilisierung der Gesamtbaueinheit bei.

Vorteilhafte Ausführungsformen der erfindungsgemäßen Deckenkanalanordnung mit zweckmäßigen Weiterbildungen und Ausgestaltungen der Erfindung sind in den weiteren Patentansprüchen angegeben.

Nach einer zweckmäßigen Ausführungsform der Erfindung weist das Aluminiumstrangpreßprofil einen kastenförmigen Querschnitt auf. Ein solches Kastenprofil hat eine sehr hohe Biegesteifigkeit und erhöht darüber hinaus die Eigenfrequenz der Zusammenbaueinheit gegenüber der Achsanregungsfrequenz des Fahrzeugs und schafft damit eine deutliche Geräuschverbesserung.

Gemäß einer bevorzugten Ausführungsform der Erfindung sind die Befestigungssicheln aus Aluminium hergestellt und besitzen einen Doppel-T-förmigen Querschnitt. Beides sind Maßnahmen zur Gewichtsersparnis und Verbesserung der Steifigkeit der Zusammenbaueinheit.

Die Befestigung der vormontierten Baueinheit an der Fahrzeugdecke erfolgt durch Schraubverbindungen, von denen jeweils zwei am oberen Schenkel einer jeden querliegenden U-förmigen Befestigungssichel vorgesehen sind. Für eine Schnellmontage sind gemäß einer bevorzugten Ausführungsform der Erfindung in jedem Befestigungspunkt der Befestigungssichel an deren oberen U-Schenkel ein Auge ausgebildet, dessen lichter Durchmesser größer ist als der Schraubenkopf einer in die Fahrzeugdecke einschraubbaren Schraube. In jedem Auge ist ein quer zur Augenöffnung sich erstreckender und diese durchdringender Schlitz zum Einschieben eines flachen Gabelstücks vorgesehen, dessen lichte Gabelweite kleiner ist als der Schraubenkopfdurchmesser und größer als der Schraubenschaftdurchmesser. Zur Montage werden die Schrauben vor Anheben der Zusammenbaueinheit an die Fahrzeugdecke in die in den Dachspriegeln der Fahrzeugdecke vorgesehenen Schraubenbohrungen teilweise eingeschraubt. Dann werden nach Anheben der Zusammenbaueinheit die Augen der Befestigungssicheln mit ihren Augenöffnungen über die Schraubenköpfe geschoben bis die oberen U-Schenkel der Befestigungssicheln an der Fahrzeugdecke anliegen. Dann werden in die Schlitze der Augen jeweils ein Gabelstück eingesetzt und die Schrauben soweit angezogen, bis der Schraubenkopf das Gabelstück im Schlitz und dadurch die Befestigungssichel an der Fahrzeugdecke verspannt.

Die erfindungsgemäße Deckenkanalanordnung ist für Omnibusse, Großabteile in Reisezügen und in Flugzeugen einsetzbar.

Die Erfindung ist anhand eines in der Zeichnung dargestellten Ausführungsbeispiels im folgenden näher beschrieben. Es zeigen:
- Fig. 1: einen Querschnitt eines Ausschnitts einer Fahrzeugdecke eines Omnibusses mit daran befestigter Deckenkanalanordnung,
- Fig. 2: eine vergrößerte Darstellung eines Ausschnitts der Deckenkanalanordnung in Fig. 1.

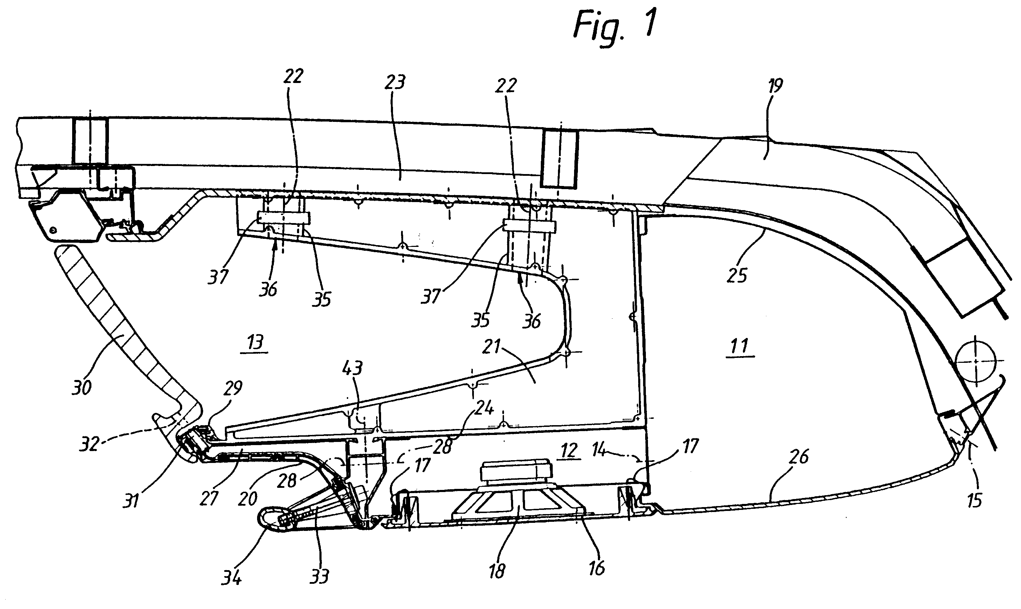

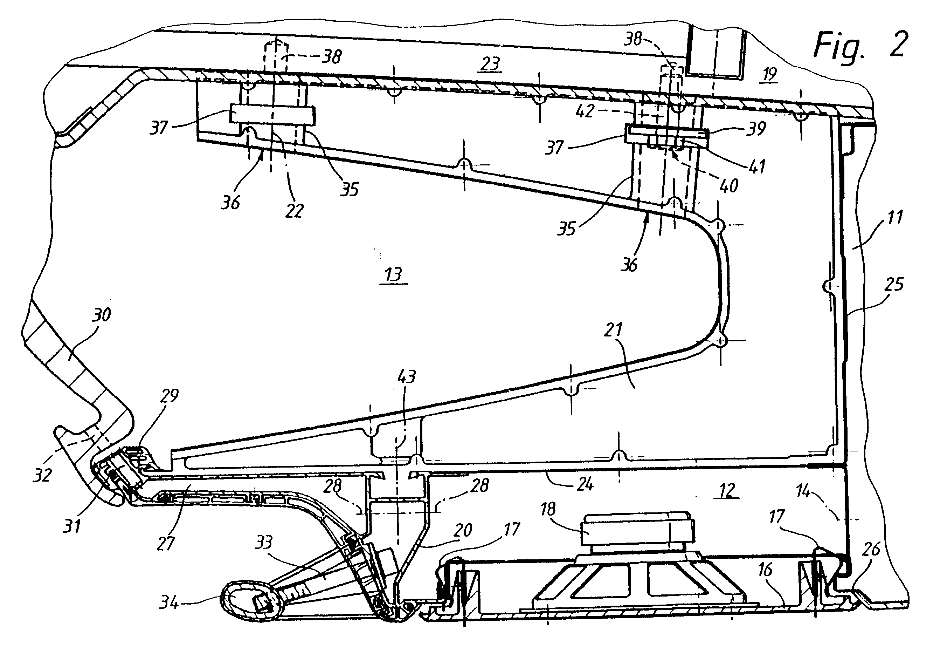

Die in Fig. 1 im Querschnitt dargestellte Deckenkanalanordnung umfaßt einen fensternahen Versorgungskanal 11, einen sich daran zur Fahrzeugmitte hin anschließenden Panelkanal 12, der eine wesentlich geringere Höhe aufweist als der Versorgungskanal 11, und eine oberhalb des Panelkanals 12 liegende Gepäckablage 13, die zur Fahrzeugmitte hin über den Panelkanal 12 vorsteht und bis hin zum Versorgungskanal 11 reicht. Versorgungskanal 11, Panelkanal 12 und Gepäckablage 13 verlaufen längsdurchgehend über die gesamte Länge des Fahrzeugs. Der Versorgungskanal 11 und der Panelkanal 12 stehen über Luftdurchlässe miteinander in Verbindung, die in Fig. 1 und 2 mit 14 angedeutet sind. In bekannter Weise sind im Versorgungskanal 11 zu den Seitenfenstern des Fahrzeugs gerichtete Luftauslaßdüsen 15 zur Luftbeaufschlagung der Fahrzeugscheiben vorgesehen. Der Panelkanal 12 ist auf seiner Unterseite längsdurchgehend offen und wird auf der Unterseite von Paneelen 16 abgedeckt, die in beidseitig der Unterseite verlaufenden Halterungen 17 eingeclipst werden. Ein Teil der Paneele 16 trägt hier nicht gezeigte, nach unten ausgerichtete Luftaustrittsdüsen und/oder Beleuchtungskörper, andere Paneele 16 Lautsprecher 18 und weitere Paneele 16 sind als sog. Blindpaneele, die ausschließlich eine Abdeckfunktion haben, nicht bestückt.

Die Deckenkanalanordnung ist eine komplette Baueinheit, die vormontiert wird und nach Zusammensetzen an die Fahrzeugdecke angesetzt und dort befestigt wird. Tragendes Element dieser Komplettbaueinheit ist ein Aluminiumstrangpreßprofil, im folgenden kurz Aluminiumprofil 20 genannt, das im Überstehbereich der Gepäckablage 13 auf deren Unterseite längsdurchgehend verläuft. Am Aluminiumprofil 20 sind im Abstand voneinander U-förmige Befestigungssicheln 21 angeordnet, die der Befestigung der Baueinheit an der Fahrzeugdecke dienen. Diese Befestigungssicheln 21 sind aus Aluminium mit einem etwa Doppel-T-förmigen Querschnitt gefertigt. Der untere Schenkel des horizontal liegenden U ist im vorderen Bereich an der Oberseite des Aluminiumprofils 20 durch eine mit 43 angedeutete Schraube befestigt und erstreckt sich über den Panelkanal 12 bis hin zum Versorgungskanal 11. Im oberen U-Schenkel sind in jeweils zwei auseinanderliegenden Befestigungspunkten Schraubverbindungen 22 zur Verschraubung der Befestigungssichel 21 in einem Dachspriegel 23 der Fahrzeugdecke 19 vorgesehen.

In der Komplettbaueinheit werden der Versorgungskanal 11 und der Panelkanal 12 von Blechen aus Aluminium gebildet, die im Rollverfahren verformt sind und an dem Aluminiumprofil 20 unmittelbar oder mittelbar angeclincht sind. Wie aus der vergrößerten Darstellung in Fig. 2 hervorgeht, ist ein die Oberseite des Panelkanals 12 und zugleich die Unterseite der Gepäckablage 13 bildendes Blech 24 am in Fig. 2 linken Rand des Aluminiumprofils 20 angeclincht und im übrigen an der Vielzahl der Befestigungssicheln 21 abgestützt. Der Versorgungskanal 11 wird von einem oberen Blech 25 und einem entsprechend verformten unteren Blech 26 umschlossen, die aneinander und an dem Blech 24 angeclincht sind. Das obere Blech 25 verläuft dabei teilweise parallel zum Joch der U-förmigen Befestigungssicheln 21 und ist an der Vielzahl der Befestigungssicheln 21 abgestützt.

Das Aluminiumprofil 20 ist auf seiner Unterseite bogenförmig nach oben geführt und auf seiner Oberseite ebenflächig ausgebildet. Die obere Ebene des Aluminiumprofils 20 bildet den vorderen Teil der Gepäckablage 13. Zwischen Oberseite und Unterseite des Aluminiumprofils 20 verbleibt ein Hohlraum 27, der mit dem Panelkanal 12 über mit 28 angedeutete Luftdurchlässe in Verbindung steht. Am vorderen Ende ist das Aluminiumprofil 20 stegartig nach oben gezogen. Die Vorderseite des Stegs 29 dient als Anschlagfläche für eine Vielzahl von an der Fahrzeugdecke schwenkbar gehaltenen Abdeckklappen 30 für die Gepäckablage 13. Alternativ können die Schwenklager der Abdeckklappen 30 auch an den oberen U-Schenkel der Befestigungssicheln 21 gehalten sein. Im Steg 29 sind Luftaustrittsschlitze 31 vorgesehen, die bei geschlossenen Abdeckklappen 30 mit Luftaustrittsschlitzen 32 in den Abdeckklappen 30 korrespondieren, so daß von dem Versorgungskanal 11 über die Luftdurchlässe 14 in den Panelkanal 12 einströmende Luft über den Hohlraum 27 durch die Luftaustrittsschlitze 31,32 zur Fahrzeugdecke 19 hin abströmt. An der Unterseite des Aluminiumprofils 20, in dessen bogenförmigen Bereich, sind eine Mehrzahl von im Abstand voneinander angeordneten Haltern 33 befestigt, die eine längsdurchgehende Handlaufstange 34 aufnehmen. Das untere Ende der Halter 33 und der Handlaufstange 34 ist bündig mit den in den Panelkanal 12 eingeclipsten Paneelen 16 und dem unteren Blech 26 des Versorgungskanals 11, so daß die komplett montierte Baueinheit von der Unterseite her ein ästethisches geschlossenes Gesamtbild bietet.

Anstelle der bogenförmigen Ausbildung der Unterseite des Aluminiumprofils 20, kann dieses im Querschnitt auch kastenförmig ausgebildet werden, so daß dem Panelkanal 12 ein kastenartiger Aluminiumprofilträger vorgeordnet ist. Dieser Kastenträger kann dann für sich selbst als Handlauf oder Festhaltemöglichkeit dienen. Alternativ kann auch eine längsdurchlaufende Griffleiste einstückig an dem Kastenträger angeformt sein. Ein solcher Kastenträger weist eine außerordentlich hohe Biegesteifigkeit auf und erhöht die Eigenfrequenz der Komplettbaueinheit gegenüber der Achsanregungsfrequenz des Fahrzeugs und trägt damit deutlich zur Geräuschverbesserung bei.

Zur Realisierung der vorstehend angesprochenen Schraubverbindungen 22 zwischen den Befestigungssicheln 21 und den Dachspriegeln 23 der Fahrzeugdecke 19 ist in jedem Befestigungspunkt einer Befestigungssichel 21 am oberen U-Schenkel ein Auge 35 mit Augenöffnung 36 ausgebildet. Jedes Auge 35 weist einen quer zur Augenöffnung 36 sich erstreckenden und diese durchdringenden Schlitz 37 auf. An jeder Befestigungsstelle ist in den Dachspriegeln 23 eine Gewindebohrung 38 vorgesehen, in welche eine Schraube 40 eingeschraubt werden kann. Gewindebohrung 38 und Schraube 40 mit Schraubenkopf 41 und Schraubenschaft 42 ist in Fig. 2 nur für die eine Befestigungsstelle der Befestigungssichel 21 eingezeichnet. Eine gleiche Anordnung befindet sich auch an der zweiten Befestigungsstelle.

Zur Montage der Deckenkanalanordnung werden zunächst in alle Gewindebohrungen 38 in der Fahrzeugdecke 19 die Schrauben 40 teilweise soweit eingeschraubt, daß ihr Schraubenschaft 42 noch genügend weit aus den Dachspriegeln 23 vorsteht. Dann wird die komplett vormontierte Baueinheit mittels einer hydraulischen Hebevorrichtung an die Fahrzeugdecke angehoben und so ausgerichtet, daß die Schraubenköpfe 41 der Schrauben 40 durch die Augenöffnungen 36 hindurchgleiten. Liegen die Befestigungssicheln 21 mit ihrem oberen U-Schenkel an den Dachspriegeln 23 an, so werden durch die Schlitze 37 in den Augen 35 flache Gabelstücke 39 eingeschoben. Die Gabelstücke 39 besitzen eine lichte Gabelweite, die kleiner ist als der Durchmesser der Schraubenköpfe 41 und größer als der Durchmesser der Schraubenschäfte 42, so daß jedes Gabelstück 39 mit seiner U-förmigen Aussparung den Schraubenschaft 42 umgreift und an der Unterseite des Schraubenkopfes 41 anzuliegen vermag. Ist ein solches Gabelstück 39 eingeschoben, so wird die Schraube 40 angezogen, bis der Schraubenkopf 40 das Gabelstück 39 im Schlitz 37 und dadurch die Befestigungssichel 21 an der Fahrzeugdecke 19 verspannt.

## Patentansprüche

1. Deckenkanalanordnung für Großraumfahrzeuge mit einem längsdurchgehenden, belüftbaren, fensternahen Versorgungskanal (11), mit einem sich daran zur Fahrzeugmitte hin anschließenden, längsdurchgehenden Panelkanal (12), der gegenüber dem Versorgungskanal (11) höhenreduziert ist und über Luftdurchlässe (14) mit diesem in Verbindung steht, und mit einer oberhalb des Panelkanals (12) liegenden, über diesen zur Fahrzeugmitte hin überstehenden, längsdurchgehenden Gepäckablage (13), die sich bis zum Versorgungskanal (11) hin erstreckt,
**dadurch gekennzeichnet,**
daß im Überstehbereich der Gepäckablage (13) auf deren Unterseite längsdurchgehend ein Aluminiumstrangpreßprofil (20) verläuft, daß am Aluminiumstrangpreßprofil (20) U-förmige Befestigungssicheln (21) im Abstand voneinander mit ihrem einen über den Panelkanal (12) bis hin zum Versorgungskanal (11) sich erstreckenden U-Schenkel befestigt sind, deren anderer U-Schenkel zur Befestigung an der Fahrzeugdecke (19) vorbereitet ist, und daß Wände der Kanäle (11,12) und der Gepäckablage (13) von Blechen (24-26) gebildet sind, die unmittel- oder mittelbar an dem Aluminiumstrangpreßprofil (20) befestigt sind und sich an den Befestigungssicheln (21) abstützen.

2. Anordnung nach Anspruch 1,
**dadurch gekennzeichnet,**
daß die Befestigungssicheln (21) im Querschnitt etwa Doppel-T-förmig ausgebildet und aus Aluminium gefertigt sind.

3. Anordnung nach Anspruch 1 oder 2,
**dadurch gennzeichnet,**
daß an dem zur Befestigung an der Fahrzeugdecke (19) vorbereiteten U-Schenkel der Befestigungssicheln (21) in jeweils zwei auseinanderliegenden Befestigungspunkten Schraubverbindungen (22) zur Verschraubung in Dachspriegeln (23) der Fahrzeugdecke (19) vorgesehen sind.

4. Anordnung nach Anspruch 3,
**dadurch gekennzeichnet,**
daß in jedem Befestigungspunkt der Befestigungssicheln (21) an deren oberen U-Schenkel ein Auge (35) ausgeformt ist, dessen lichter Durchmesser größer ist als der Schraubenkopf (41) einer in die Fahrzeugdecke (19) einschraubbaren Schraube (40), und daß jedes Auge (35) einen quer zur Augenöffnung (36) sich erstreckenden und diese durchdringenden Schlitz (37) zum Einschieben eines flachen Gabelstückes (39) aufweist, dessen Gabelweite kleiner als der Schraubenkopfdurchmesser und größer als der Schraubenschaftdurchmesser ist.

5. Anordnung nach Anspruch 4,
**dadurch gekennzeichnet,**
daß jeder Augenöffnung (36) eine in eine Gewindebohrung (38) in Dachspriegeln (23) der Fahrzeugdecke (19) teilweise eingeschraubte Schraube (40) zugeordnet ist, daß die Befestigungsssicheln (21) mit den Augenöffnungen (36) ihrer Augen (35) über die Schraubenköpfe (41) bis zur Anlage des oberen U-Schenkels an der Fahrzeugdecke (19) geschoben werden, daß in jedem Schlitz (37) eine Gabelstück (39) eingesetzt wird und daß die Schraube (40) soweit angezogen wird, bis der Schraubenkopf (41) das Gabelstück (39) im Schlitz (37) und damit die Befestigungssichel (21) an der Fahrzeugdecke (19) verspannt.

6. Anordnung nach einem der Ansprüche 1 - 5,
**dadurch gennzeichnet,**
daß die Bleche (24-26) aus Aluminium und im Rollverfahren verformt sind.

7. Anordnung nach Anspruch 6,
**dadurch gekennzeichnet,**
daß die Bleche (24-26) am Aluminiumstrangpreßprofil (20) angeclincht sind.

8. Anordnung nach einem der Ansprüche 1 - 7,
**dadurch gekennzeichnet,**
daß das Aluminiumstrangpreßprofil einen kastenförmigen Querschnitt aufweist.

9. Anordnung nach einem der Ansprüche 1 - 8,
**dadurch gekennzeichnet,**
daß am Alumiumstrangpreßprofil (20) zur Fahrzeugmitte hin vorstehende Halter (33) zur Aufnahme einer längsdurchgehenden Handlaufstange (34) im Abstand voneinander befestigt sind.

10. Anordnung nach einem der Ansprüche 1 - 8,
**dadurch gekennzeichnet,**
daß am Aluminiumstrangpreßprofil (20) eine zur Fahrzeugmitte hin vorstehende, längsdurchgehende Griffleiste einstückig angeformt ist.

11. Anordnung nach einem der Ansprüche 1 - 10,
**dadurch gekennzeichnet**,
daß der nach unten hin offene Panelkanal (12) an seiner Unterseite durch einclipsbare Paneele (16) abgedeckt ist und daß in einem Teil der Paneele (16) nach unten gerichtete Luftauslaßdüsen, Beleuchtungskörper, Lautsprecher (18) und/oder sonstige Elemente integriert sind.

## Claims

1. A ceiling duct arrangement for large-capacity coach-type vehicles with a longitudinally continuous ventable supply duct (11) close to the windows with, adjacent to it on the same side as the vehicle centre, a longitudinally continuous panel duct (12) which is of reduced height in comparison with the supply duct (11), communicating with this latter by air ports (14) and situated above the panel duct (12) there is, projecting beyond this in the direction of the centre of the vehicle, a longitudinally continuous luggage rack (13) which extends as far as the supply duct (11), characterised in that an extruded aluminium profiled member (20) extends continuously and longitudinally along the under side of the projecting portion of the luggage rack (13), and in that fixed to the extruded aluminium profiled member (20) at intervals from one another there are U-shaped fixing members (21) which are secured by that arm of the U which extends over the panel duct (12) and as far as the supply duct (11), the other arm of the U being prepared for attachment to the vehicle ceiling (19) and in that walls of the ducts (11,12) and of the luggage rack (13) are formed by plates (24-26) which are fixed directly or indirectly to the extruded aluminium profiled member (20) and are supported on the fixing members (21).

2. An arrangement according to claim 1, characterised in that the fixing members (21) are of substantially double-T shaped cross-section and are made from aluminium.

3. An arrangement according to claim 1 or 2, characterised in that on the arm of the U-shaped fixing members (21) which is prepared for attachment to the vehicle ceiling (19), there are, situated in each case at two separate fixing points, screwed connections (21) adapted to be screwed into roof supports (23) in the vehicle ceiling (19).

4. An arrangement according to claim 3, characterised in that formed in each attachment point of the fixing members (21) and on the upper arm of the U thereof there is an eye (35) the inside diameter of which is greater than the screw head (41) of a screw (40) intended to be screwed into the vehicle ceiling (19) and in that each eye (35) has, extending crosswise to and passing through the eye aperture (36) a slot (37) into which it is possible to push a flat bifurcated member (39) the width inside the bifurcations being smaller than the screw head diameter and larger than the screw shank diameter.

5. An arrangement according to claim 4, characterised in that there is associated with each eye aperture (36) a screw (40) screwed partially into a screw threaded bore (38) in roof supports (23) of the vehicle ceiling (19) and in that the fixing members (21) have the apertures (36) of their eyes (35) pushed over the screw heads (41) until they abut the upper arm of the U on the vehicle ceiling (19) and in that a bifurcated member (39) is inserted into each slot (37) and in that the screw (40) is sufficiently tightened that the screw head (41) clamps the bifurcated member (39) in the slot (37) and so clamps the fixing bracket (21) on the vehicle ceiling (19).

6. An arrangement according to one of claims 1 to 5, characterised in that the plates (24-26) are shaped from aluminium by a rolling process.

7. An arrangement according to claim 6, characterised in that the plates (24-26) are clinched onto the extruded aluminium profiled member (20).

8. An arrangement according to one of claims 1 to 7, characterised in that the extruded aluminium profiled member has a box-shaped cross-section.

9. An arrangement according to one of claims 1 to 8, characterized in that holders (33) intended to accommodate a longitudinally continuous hand rail (34) are fixed at intervals from one another On the extruded aluminium profiled member (20) and project towards the centre of the vehicle.

10. An arrangement according to one of claims 1 to 8, characterised in that a longitudinally continuous grip rail is integrally formed on the extruded aluminium profiled member (20) and projects towards the centre of the vehicle.

11. An arrangement according to one of claims 1 to 10, characterised in that the downwardly open panel duct (12) is on its under side covered by panels (16) which can be clipped into place and in that downwardly directed air outlets, lighting units, loudspeakers (18) and/or other elements are integrated into a part of the panels (16).

## Revendications

1. Système de conduits de plafond pour véhicules de grand volume, comprenant un conduit d'alimentation (11) dans lequel peut être envoyé de l'air, s'étendant longitudinalement de façon continue et proche des fenêtres, un conduit sous lambris (12) qui s'y raccorde en direction du milieu du véhicule et s'étend longitudinalement de façon continue, conduit sous lambris qui est réduit en hauteur par rapport au conduit d'alimentation (11) et communique avec celui-ci par des passages d'air (14), ainsi qu'un logement de bagages (13) situé au-dessus du conduit sous lambris (12), faisant saillie de ce conduit en direction du milieu du véhicule et s'étendant longitudinalement de façon continue, logement qui se prolonge jusqu'au conduit d'alimentation (11),
caractérisé en ce
qu'un profit extrudé d'aluminium (20) s'étend longitudinalement de façon continue dans la zone saillante du logement de bagages (13), sur le dessous de ce logement, que des pièces de fixation (21) en U sont fixées à distance les unes des autres au profité extrudé d'aluminium (20) par une branche du U s'étendant par-dessus le conduit sous lambris (12) jusqu'au conduit d'alimentation (11), l'autre branche du U de chaque pièce de fixation étant préparée pour la fixation au plafond (19) du véhicule, et que des parois des conduits (11, 12) et du logement de bagages (13) sont formées par des tôles (24 - 26) fixées directement ou indirectement au profilé extrudé d'aluminium (20) et appuyées aux pièces de fixation (21).

2. Système selon la revendication 1, caractérisé en ce que tes pièces de fixation (21) possèdent une section droite de forme à peu près en double T et sont fabriquées d'aluminium.

3. Système selon la revendication 1 ou 2, caractérisé en ce que des assemblages vissés (22) sont prévus chaque fois en deux points de fixation mutuellement espacés sur la branche du U des pièces de fixation (21) qui est préparée pour la fixation au plafond (19) du véhicule, en vue du vissage dans des arceaux de toit (23) du plafond (19) du véhicule.

4. Système selon la revendication 3, caractérisé en ce qu'un oeil (35) est formé en chaque point de fixation de la branche supérieure du U des pièces de fixation (21), oeil dont le diamètre intérieur est plus grand que la tête (41) d'une vis (40) pouvant être vissée dans le plafond (19) du véhicule, et que chaque oeil (35) présente une fente (37), orientée transversalement à l'ouverture (36) de l'oeil et traversant cette ouverture, en vue de l'insertion d'une pièce plate formant une fourchette (39) dont la largeur intérieure, entre les dents, est plus petite que le diamètre de la tête de vis et plus grande que le diamètre de la tige de vis.

5. Système selon la revendication 4, caractérisé en ce qu'une vis (40), partiellement vissée dans un trou taraudé (38) d'un arceau de toit (23) du plafond (19) du véhicule, est coordonnée à chaque ouverture (36) d'un oeil, que les pièces de fixation (21) sont glisées par les ouvertures (36) de leurs yeux (35) par-dessus les têtes (41) des vis, jusqu'à l'application de la branche supérieure du U contre le plafond (19) du véhicule, qu'une fourchette (39) est insérée dans chaque fente (37) et que la vis (40) est serrée jusqu'à ce que sa tête (41) bloque la fourchette (39) dans la fente (37) et bloque ainsi la pièce de fixation (21) contre le plafond (19) du véhicule.

6. Système selon une des revendications 1 - 5, caractérisé en ce que les tôles (24 - 26) sont en aluminium et sont déformées par un procédé de roulage.

7. Système selon la revendication 6, caractérisé en ce que les tôles (24 - 26) sont fixées par rabattement ou sertissage au profité extrudé d'aluminium (20).

8. Système selon une des revendications 1 - 7, caractérisé en ce que le profité extrudé d'aluminium possède une section droite en caisson.

9. Système selon une des revendications 1 - 8, caractérisé en ce que des supports (33), destinés à recevoir une barre (34) formant une main courante longitudinalement continue, sont fixés à distance les uns des autres au profité extrudé d'aluminium (20), de manière à faire saillie vers le milieu du véhicule.

10. Système selon une des revendications 1 - 8, caractérisé en ce qu'une barre de maintien, s'étendant longitudinalement de façon continue, est formée d'un seul tenant sur le profilé extrudé d'aluminium (20), de manière à faire saillie vers le milieu du véhicule.

11. Système selon une des revendications 1 - 10, caractérisé en ce que le conduit sous lambris (12), ouvert vers le bas, est recouvert sur son côté inférieur par des panneaux de lambris ou de revêtement (16) agrafables et que des buses de sortie d'air, des appareils d'éclairage, des hauts-parleurs (18) et/ou d'autres éléments sont intégrés dans une partie de ces panneaux (16).
